Europäisches Patentamt

**European Patent Office**

**Office européen des brevets**

(11) Numéro de publication: **0 091 421**

**A1**

# (12) DEMANDE DE BREVET EUROPEEN

(21) Numéro de dépôt: **83870038.3**

(22) Date de dépôt: **05.04.83**

(51) Int. Cl.³: **B 65 G 61/00**

(30) Priorité: **07.04.82 BE 207776**

(43) Date de publication de la demande:
**12.10.83 Bulletin 83/41**

(84) Etats contractants désignés:
**AT CH DE FR GB IT LI LU NL SE**

(71) Demandeur: **P.V.B.A. Engineering DE MUYNCK**
**Stationsstraat 120**
**B-8850 Ardooie(BE)**

(72) Inventeur: **De Muynck, Gabriel**
**Stationsstraat 120**
**B-8850 Ardooie(BE)**

(74) Mandataire: **De Brabanter, Maurice et al,**
**Bureau VANDER HAEGHEN 63 Avenue de la Toison d'Or**
**B-1060 Bruxelles(BE)**

(54) **Procédé et machine pour le traitement de marchandises.**

(57) On commande et positionne, à l'aide d'une tige filetée (39) entraînée en rotation par un moteur électrique (48), les curseurs (38) pourvus de moyens de renversement de marche, limitant la course d'un chariot (31) d'une machine à empiler ou de manutention, commandé pneumatiquement par un vérin magnétique (34).

FIG. 4

L'invention est relative à un procédé et à une machine pour manutentionner, ranger, empiler, prélever, charger, décharger, transporter ou trier des objets quelconques au moyen d'un chariot, muni de moyens d'agrippage, monté sur un pont de chariotage, de manière à circuler à trajet répété suivant une trajectoire dont la course est limitée par au moins un curseur pourvu de moyens d'encliquetage et de renversement de marche du chariot.

Elle trouve ses principales applications dans la manutention interne des marchandises pour alimenter et décharger des machines quelconques, principalement celles utilisées dans l'industrie de la transformation et en particulier dans l'industrie du bois ou l'industrie mécanique et pour transférer un objet partiellement usiné d'une desdites machines à une autre.

On connaît par la demande de brevet allemand No.2.320.590 une machine destinée à la manutention de pièces de bois garnies de moulures. Cette machine comprend un pont de chariotage fixe, sur lequel circule, dans un mouvement rectiligne de va et vient, un chariot ou coulisseau muni de moyens d'agrippage constitués par exemple de ventouses ou de griffes.

La commande du mouvement d'avance et de recul du chariot sur le pont de chariotage est réalisée mécaniquement à l'aide d'un mécanisme d'encliquetage et de renversement de marche monté sur curseurs.

Lesdits curseurs sont mobiles le long d'un guide rectiligne et sont entraînés par une chaîne à maille plate ou une courroie cannelée.

Dans cette machine connue., le positionnement des curseurs, à l'aide d'une courroie ou d'une chaîne à maille simple et de roues à pignon, est imprécis, sujet à l'usure et aux pannes. Un tel dispositif est soumis au phénomène de dilatation et ne présente pas un point d'appui fixe.

La fourchette de tolérance entre deux positions successives du curseur dépasse 2 à 3 millimètres. Pour éviter une tension excessive dans la courroie ou la chaîne, il est en effet indispensable de prévoir un certain jeu. De plus, il faut prévoir un certain jeu pour le positionnement de la roue à pignon.

Les pièces de bois amenées du poste d'usinage au poste d'alimentation de l'empileuse automatique, sont transportées individuellement et transversalement à leur axe longitudinal, sur une palette de chargement sur laquelle elles sont disposées les unes à côté des autres en couches successives.

En outre, les objets à transporter sont manipulés brutalement. Lorsque le chariot est en place au-dessus du poste d'alimentation, cette machine robot connue laisse choir lourdement les moyens d'agrippage sur les objets à enlever. Après déplacement au poste de travail ou d'empilage, ces mêmes machines font choir lourdement les objets à leur emplacement approximatif. Les objets sont ainsi déposés grossièrement les uns à côté des autres, en laissant entre eux des espacements irréguliers.

En vue d'obtenir un certain alignement, les objets sont poussés contre les objets mis en place sur la même couche, quelques instants plus tôt, à l'aide d'un dispositif à balancier, monté latéralement sur le chariot, à hauteur des moyens d'agrippage.

Dans cette machine connue, le positionnement des objets doit toujours se faire dans le même sens, en raison de la présence d'un dispositif à balancier. Lorsqu'une couche est remplie, les curseurs doivent d'abord revenir à leur position initiale avant de pouvoir commencer à remplir la couche suivante. L'empilement obtenu n'est pas stable et les piles d'objets ont tendance à se renverser au cours du transport, à moins qu'on ait prévu de placer à la main, des battes transversales.

La présente invention a pour but d'éviter les inconvénients du procédé et de la machine susdits. Elle est relative à un procédé pour manutentionner, ranger, empiler prélever, charger, décharger, transporter ou trier des objets quelconques, au moyen d'un chariot muni de moyens d'agrippage, monté sur un pont de chariotage, de manière à circuler à trajet répété suivant une trajectoire dont la course est limitée par au moins un curseur pourvu de moyens d'encliquetage et de renversement de marche du chariot.

Le procédé est essentiellement caractérisé en ce qu'on commande et positionne lesdits curseurs constitués chacun d'un écrou, à l'aide d'une tige filetée entraînée en rotation par un moteur électrique.

Suivant une particularité de l'invention, on commande le chariot de guidage pneumatiquement, à l'aide d'un vérin magnétique à double effet.

On positionne avantageusement chaque curseur à l'aide d'un dispositif électronique, comprenant un émetteur d'impulsions et de compteur d'impulsions qui détermine le nombre de révolutions de chaque tige filetée entraînée en rotation et détermine ainsi le déplacement du curseur par rapport à chacune des tiges filetées.

L'invention concerne également une machine qui met en oeuvre le procédé décrit ci-dessus et qui comporte un pont de chariotage sur lequel circule à trajet répété un chariot muni de moyens d'agrippage.

Dans une forme de réalisation particulière, le pont de chariotage est réglé en hauteur par coulissement le long de guidages à colonne à l'aide d'un système vis-écrou, pourvu d'un émetteur d'impulsions et de compteurs.

D'autres particularités et détails de l'invention apparaîtront au cours de la description détaillée suivante, illustrée à l'aide des figures annexée ci-joint, lesquelles figures sont données à titre informatif et non limitatif en vue d'illustrer deux formes de réalisation choisies de l'invention.

Dans ces dessins :

- la figure 1 est une vue en élévation latérale d'une forme de réalisation d'une machine empileuse automatique suivant l'invention;

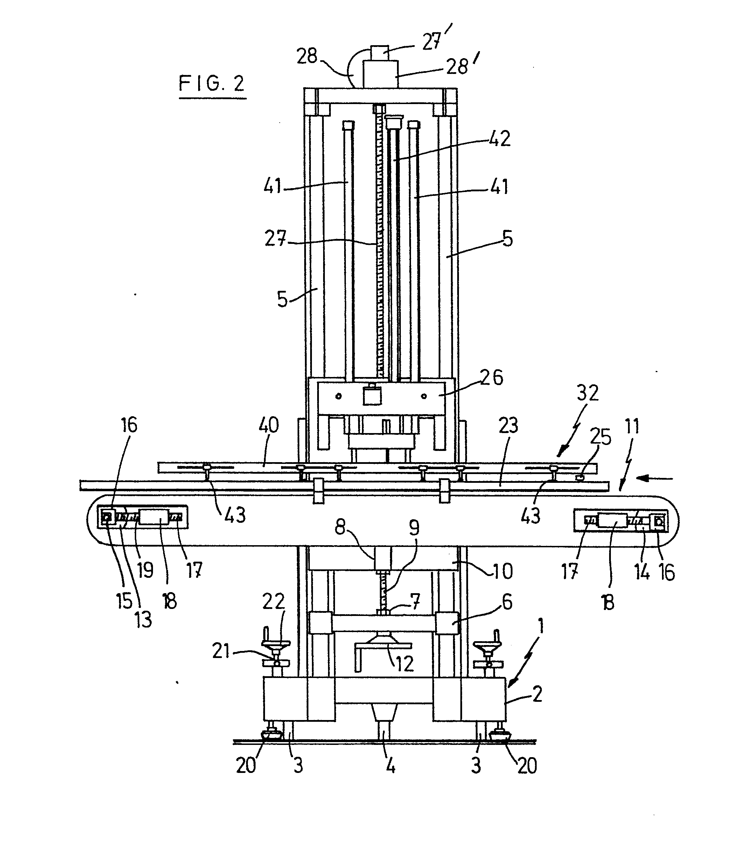

- la figure 2 est une vue de bout de la machine montrée à la figure 1;

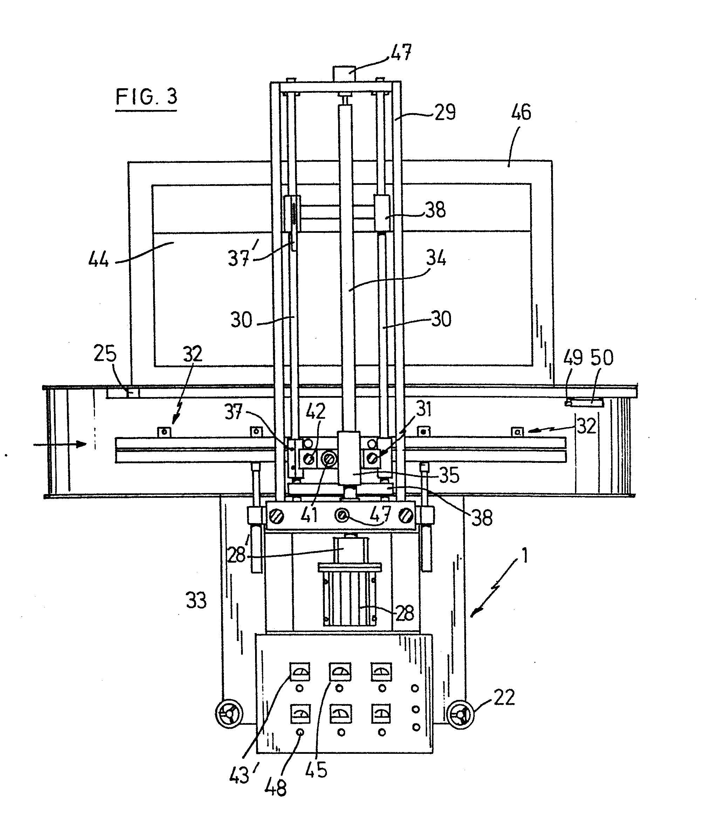

- la figure 3 est une vue en plan de la machine montrée aux figures 1 et 2;

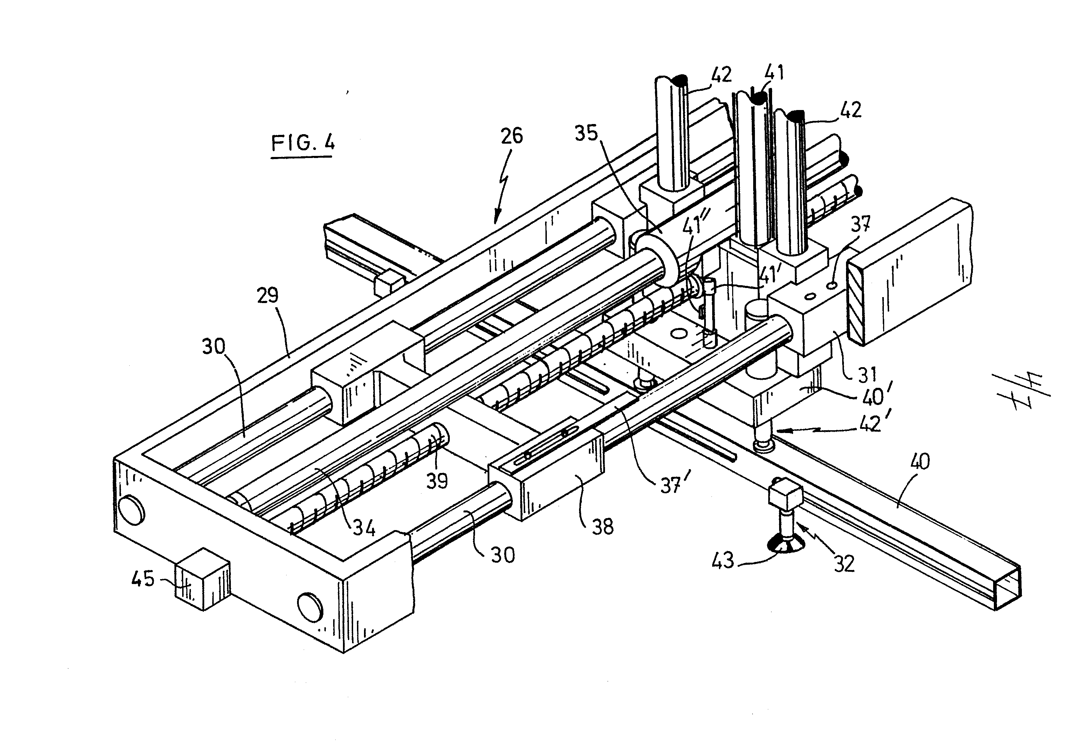

- la figure 4 est une vue en perspective d'un curseur muni de mécanismes d'encliquetage et d'un chariot muni d'un cylindre de compensation;
- la figure 5 montre l'interrupteur de contact illustré à la figure 4, lorsque le chariot s'appuye contre la butée du curseur;
- la figure 6 montre la machine représentée à la figure 1, lorsque les moyens d'agrippage empilent les objets à l'endroit indiqué;

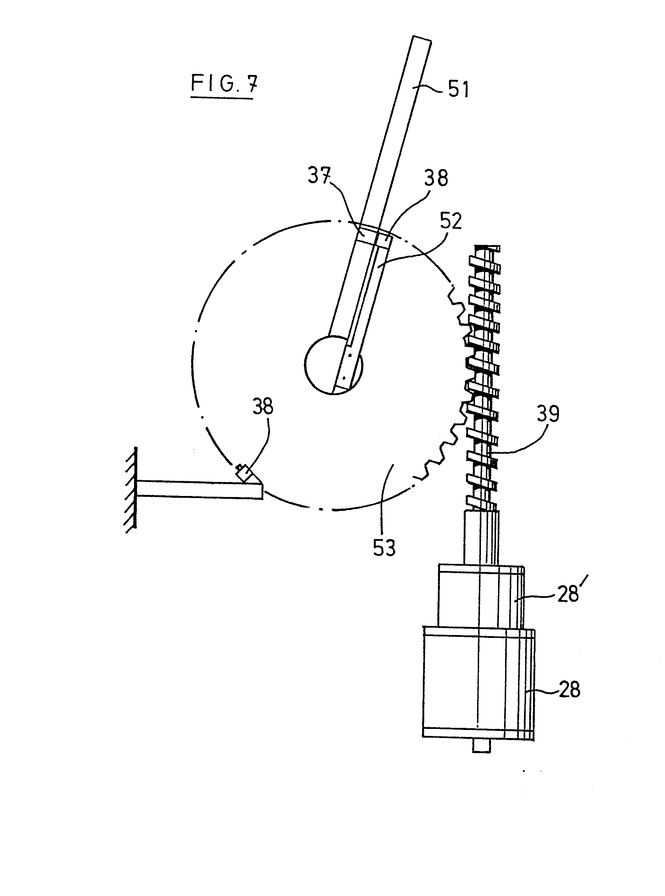

- la figure 7 est une vue en plan d'une seconde forme de réalisation, à savoir une machine automatique munie d'un bras oscillant.

Dans ces figures, les mêmes notations de référence désignent des éléments identiques ou analogues.

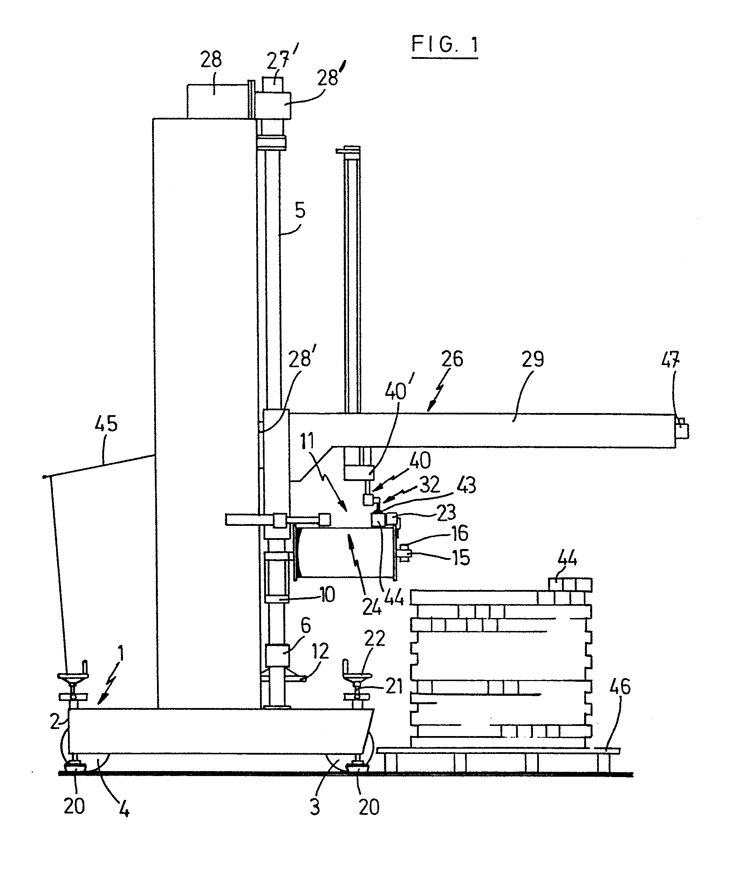

Dans une forme de réalisation particulière, montrée à la figure 1, la machine automatique comprend un châssis désigné dans son ensemble par la notation de référence 1, et étant constituée d'un cadre 2 rectangulaire horizontal qui repose sur deux roues 3 ancrées fixement et d'une roue pivotante 4.

Le cadre horizontal 2 porte deux colonnes cylindriques verticales 5 reliées entre elles par une pièce transversale.

La pièce transversale 6 est munie d'un palier à billes 7 dans lequel est monté une tige filetée 9. Cette tige filetée 9 actionne vers le haut et le bas une pièce- support qui est munie d'un alésage 8 et sur laquelle est montée une courroie transporteuse sans fin 11. L'extrémité opposée de la tige filetée 9 comporte un volant 12 permettant de régler la hauteur de la bande transporteuse.

L'axe 15 du tendeur de courroie 13 ou du moteur à tambour 14 est amené sur des fourchettes 16 aux extrémités d'une tige filetée 17 exerçant sur les supports d'une bande transporteuse, une poussée dont la force est réglée par un écrou 18. Les tiges 17 sont fixées sur des pivots 19.

Le châssis 1 est pourvu de quatre amortisseurs 20, mis en place à l'aide des vis de réglage 21 et des roues de commande 22.

De cette manière on peut transporter facilement la machine vers n'importe quelle ligne de production et l'y mettre en place de manière stable. La bande transporteuse 11 prend en charge les objets à la sortie de la ligne de production et les transporte dans le sens de la longueur le long d'une latte de guidage 23 vers un poste d'alimentation.

Une disposition légèrement oblique de la latte de guidage 23 par rapport à la bande transporteuse 11, favorise les conditions d'écoulement des objets le long de cette latte 23. Une cellule photo-électrique 25 contrôle le nombre d'objets qui glissent vers le poste d'alimentation 24.

On règle la hauteur d'une table de chariotage 26 en déplaçant celle-ci le long de deux colonnes de guidage 5 à l'aide d'une tige filetée 27 munie d'un émetteur d'impulsions 27' et de compteurs d'impulsions non montrés et accouplée à un moteur de freinage 28 muni d'une boîte démultiplicatrice 28', d'un moteur pas à pas ou d'un servomoteur.

Deux poutres-supports 29 forment ou portent deux tiges de guidage 30 ou voie de roulement pour un chariot 31, muni d'au moins un moyen d'agrippage 32 entraînés en mouvement rectiligne alternatif le long desdites poutres-supports 29 par des moyens de transmission 33 constitués par exemple d'un cylindre pneumatique 34 à double action, et qui comprend un piston non montré en matériau magnétique permanent.

L'effort exercé sur le piston est transmis à travers le cylindre d'aluminium 34 à une pièce métallique 35 extérieure au cylindre par accouplement magnétique. On utilise à ce propos, par exemple un piston pneumatique du type DGO de la firme FESTO.

Ce cylindre procure le grand avantage de n'exiger que la moitié de la longueur d'emboîtement requise par un cylindre habituel avec piston.

Comme moyens de commande automatique du chariot 31, on utilise deux interrupteurs à contact 37 fixés chacun sur le chariot 31.Les curseurs 38 sont disposés éventuellement devant et derrière dudit chariot 31. Ces curseurs 38 sont entraînés automatiquement de sorte qu'ils peuvent prendre de nouvelles positions le long des poutres-supports et tiges de guidage 30 à l'aide des tiges filetées 39.

Le curseur 38 est constitué d'un écrou creux, que l'on met en mouvement, en l'assemblant à une tige filetée 39 reliée à un moteur électrique 28 par un accouplement électro-magnétique 28'. La tige filetée 39 peut être entraînée par un moteur pas à pas et un servomoteur.Le dispositif constitué d'une vis-écrou,d'un émetteur d'impulsions et de compteurs d'impulsions permet d'assurer au curseur 38 un positionnement précis malgré un certain jeu dû par exemple à l'usure du filetage. Le chariot, par son mouvement alternatif, agit sur le curseur de manière à repousser celui-ci contre le pas de vis.L'usure du filetage n'influence pas la précision du positionnement du curseur, puisque la distance entre deux positions successives du curseur est constante lorsque le curseur est repoussé contre le filetage.

Les interrupteurs à contact 37 sont enclenchés ou désenclenchés à l'aide des curseurs 38. Ils commandent entre autres le mouvement du vérin pneumatique 41.

Les moyens d'agrippage 32 sont constitués d'une barre 40 fixée au chariot 31 au moyen d'un cylindre pneumatique à double action 41 et une tige de guidage 42 et à l'aide d'un vérin pneumatique compensateur 41' guidé par les tiges de guidage 42'. La barre 40 porte une série de moyens d'agrippage 32, par exemple de ventouses 43.

Lors de l'enlèvement des objets 44 au poste de réception 24 et le dépôt de ceux-ci au poste de travail ou d'empilage 44', le vérin de compensation reprend une fraction réglable du poids de la barre transversale 40 et des objets.

Le vérin de compensation 41' est actionné sous pression sous commande de l'interrupteur de contact 37 et libère l'air comprimé sous l'action d'un switch électromagnétique 41" monté sur le vérin de compensation 41'.

Le vérin compensateur 41' susdit forme un système 40" pneumatique jouant le rôle d'un contrepoids qui prend en charge une partie du poids de la barre 40. Ce système fait en sorte que les ventouses 43 enlèvent et déposent les objets avec une extrême douceur. Il est constitué d'un vérin pneumatique muni d'un contact magnétique. Les organes d'agrippage comprennent également des mécanismes d'encliquetage et de renversement de marche afin de commander le mouvement de va et vient des moyens d'agrippage 32. Les ventouses 43 sont reliées à une pompe à vide ou à un éjecteur Venturi du type Festo-Pneumatic.

A des intervalles réguliers, les moyens d'agrippage 32 susdits enlèvent une série d'objets dont le nombre est prédéterminé et les amènent vers un poste de travail ou d'empilement 44'.

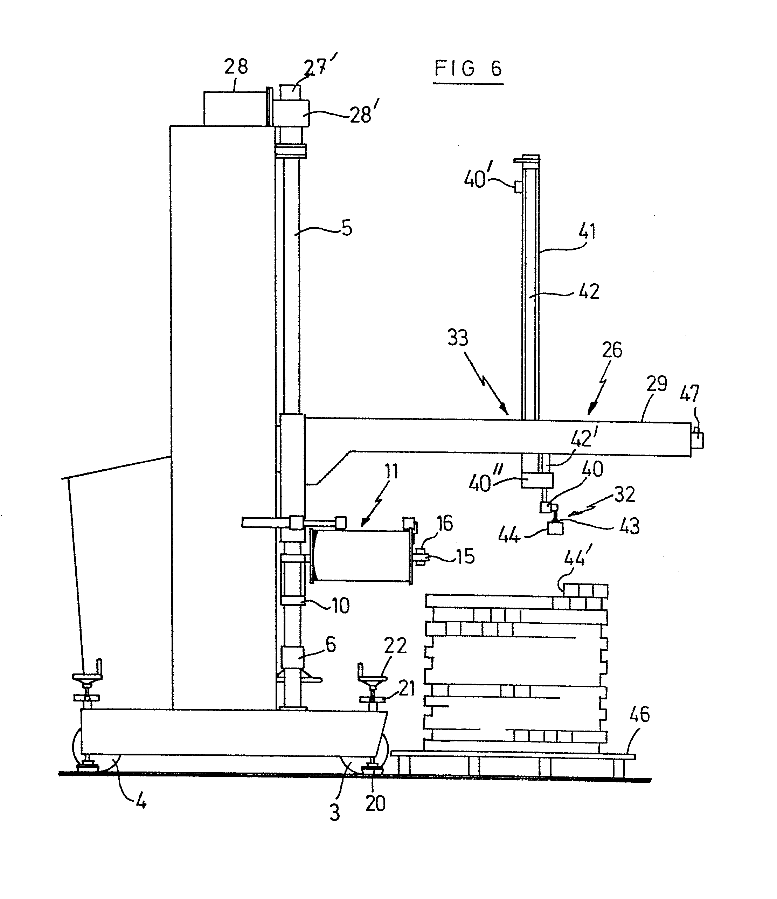

L'endroit précis où la série d'objets doit être déposée, est déterminé par le point d'arrêt du curseur 38. Les divers points de repos de chaque curseur 38 peuvent être facilement programmés. La distance entre deux points de repos successifs coïncide généralement avec la largeur des objets. Ces distances, ainsi que le degré de recouvrement de deux couches successives sont d'abord insérées dans l'automate à l'aide de compteurs 45, par exemple du type KCX 4 DM de la firme Koyo. (Figure 6)

Par des trajets répétés du chariot 31 et des moyens d'agrippage 32, on forme une couche complète d'objets sur la palette 46. Deux butées de fin de course, montées chacune à une extrémité de la poutre-support 29, limitent automatiquement la course de chaque curseur lors d'un réglage fautif, afin de protéger la table de chariotage.

L'état du curseur 38 peut être déterminé à l'aide d'un système électrique de contrôle constitué d'un émetteur d'impulsions rotatif 47, par exemple de la marque Höhner, qui fournit le nombre de fractions de rotations de la tige filetée 39 entraînée par le moteur.

Chaque curseur 38 susdit est destiné à la conduite automatique du chariot 31. Il règle les diverses positions des moyens d'agrippage 32 de l'automate. La conduite du chariot 31 est de ce fait rendue totalement indépendante des moyens d'entraînement 33.

La conduite de la machine automatique en est simplifiée, de sorte qu'il est possible d'utiliser celle-ci dans différentes chaînes de production avec des périodes de conversion très courtes.

L'automate contient, en effet, une conduite numérique simple. Par rapport aux machines connues, la machine automatique décrite ci-dessus est très maniable et rapide.

Les données spécifiques des pièces à enlever sont introduites de manière très simple dans le tableau de commande :

- le nombre de pièces disposées les unes à la suite
  des autres, à enlever simultanément;
- la largeur des objets à enlever;
- le nombre de pièces qui seront rangées les unes à
  côté des autres sur la palette;
- la mesure de recouvrement;
- le nombre de couches à superposer.

Le fonctionnement de l'automate décrit ci-dessus est simple comme il ressort de la description suivante de celle-ci.

En enclenchant le bouton 48, on met une bande transporteuse 11 en mouvement. Cette bande transporteuse 11 transporte divers objets dans ou loin d'une ligne de production jointe à la machine. Les objets glissent le long d'une latte de guidage 23 vers le poste d'alimentation 24 et sont comptés par cellule photo-électrique 25. Les dimensions de la palette 23, ainsi que les dimensions des objets (longueur, hauteur, largeur et recouvrement éventuel),sont introduites dans la machine.

Dès le moment où la cellule photo-électrique 25 et le compteur d'impulsions 43' ont détecté un nombre prédéterminé d'objets au poste d'alimentation 24, ils commandent l'arrêt de la bande transporteuse 11 pendant qu'un chariot 31 muni de moyens d'agrippage 32 prend place au-dessus du poste d'alimentation 24.

La cellule photo-électrique 25 et le compteur d'impulsions 43' actionnent une première vanne non montrée  du vérin pneumatique 41 qui abaisse la barre transversale 40 et les moyens d'agrippage vers le poste d'alimentation 24 ainsi qu'une seconde vanne du vérin pneumatique de compensation 41' destiné à prendre en charge une fraction .du poids propre et de la charge de la barre transversale 40, de manière que les organes d'agrippage enlèvent en douceur l'objet ou la série d'objets 44.

Au moment du contact des organes d'agrippage sur lesdits objets 44, le switch magnétique 41" commande la mise en oeuvre des organes d'agrippage, et enclenche par exemple l'aspiration des ventouses et la montée de la barre 40.

Un second switch magnétique 40', monté au sommet du vérin pneumatique 41, détecte le moment où la barre transversale est entièrement soulevée et commande le déplacement du chariot 31 vers le poste de travail. Il commande également la remise en route de la bande transporteuse 11.

Au cas où les organes d'agrippage n'enlèveraient pas les objets, ceux-ci seraient détectés sur la butée 50 de la bande transporteuse à l'aide d'une cellule photo- électrique 49 actionnant un système d'alarme.

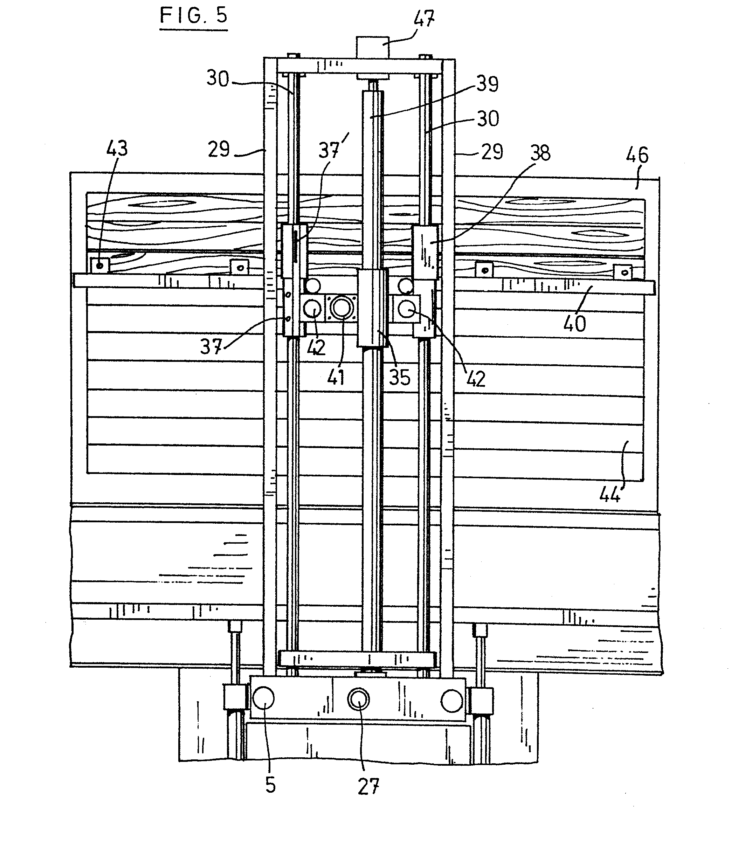

Dès que les moyens d'agrippage 32 soulevant l'objet ou la série d'objets atteignent le point haut, le chariot 31 glisse dans la direction de l'endroit d'entreposage. Le chariot 31 est actionné à l'air comprimé à l'aide du vérin magnétique commandé pneumatiquement. Lorsque le chariot 31 s'approche du curseur 38, un interrupteur à contact 37 provoque l'arrivée d'air comprimé vers le cylindre de compensation 41' qui prend en charge une fraction du poids de la barre transversale 40 (figure 5). Le chariot est freiné hydrauliquement lorsqu'il se heurte contre la butée du curseur 38. Le cylindre pneumatique 41 s'allonge jusqu'au moment où les objets ont atteint leur emplacement précis (figure 6). Cet instant est détecté par le switch électromagnétique monté sur le vérin magnétique susdit. Ce switch commande l'interruption du vide déns les ventouses et le renversement de marche des organes d'agrippage, qui sont entraînés à nouveau vers le haut et conduits vers le poste d'alimentation. La distance dans le sens vertical entre la bande transporteuse sans fin 11 et l'endroit d'empilage 44 est maintenu aussi petit que possible par déplacement du pont 26 dès qu'une couche complète sur la palette 46 est formée ou enlevée, c'est-à-dire, dès le moment où, s'il s'agit d'un empilage, la pile vient à hauteur de la bande transporteuse ou s'il s'agit du déchargement d'une palette, la pile descend à hauteur de la bande transporteuse.

Pendant le retour du chariot 31 et des moyens d'agrippage 32 vers le poste d'alimentation, le curseur 38 se déplace à l'aide de la tige filetée 39 qui, pendant un bref instant, est accouplée magnétiquement au moteur 48, commandé par l'émetteur d'impulsions 47 ou actionné par un servomoteur ou un moteur pas à pas afin de subir un déplacement précis correspondant à la largeur de l'objet additionné éventuellement d'un espacement entre deux objets successifs.

Ce déplacement est enregistré par l'émetteur d'impulsions et transmis à au moins un compteur d'impulsions 45 qui, dès qu'il a atteint sa valeur de consigne, transmet à son tour une impulsion au microprocesseur destiné à traiter celle -ci. C'est ainsi que divers objets sont disposés les uns à côté des autres lorsque la machine est utilisée pour empiler des pièces.

On peut régler la distance entre deux positions successives de chaque curseur (38) d'un intervalle légèrement supérieur à celles des objets (44) à empiler, de manière à ménager un intervalle entre deux objets successifs d'une même couche. Cet espacement permet le séchage des objets, sans qu'il soit nécessaire de placer manuellement des lattes transversales entre les diverses couches de l'empilement.

Dans une seconde forme de réalisation, la machine est munie d'un bras oscillant 51 qui se déplace entre deux curseurs 38 se déplaçant le long d'une trajectoire circulaire à l'aide par exemple d'une vis sans fin 39 et une roue dentée 53.

Il est évident que l'invention n'est en aucune façon limitée à la forme de réalisation décrite ci-dessus qui est donnée plutôt à titre illustratif, et que de nombreuses modifications peuvent être apportées à ladite forme de réalisation, sans pour autant sortir du cadre de l'invention.

La machine peut par exemple être utilisée pour charger une ligne de production à partir d'objets rangés sur une palette.

On peut évidemment apporter des modifications constructives à la machine, et en particulier aux moyens d'agrippage du chariot ou du bras oscillant. Ces moyens d'agrippage peuvent être constitués d'une élingue, estrope, haude, électro-aimant, crochet, griffe, pince ou main mécanique.

La machine suivant l'invention permet d'empiler des objets de dimensions variées. Il suffit de prévoir un détecteur de mesure qui veillera à ce que le curseur 39 prenne une position correspondant à la mensuration.

REVENDICATIONS

1. Procédé pour manutentionner, ranger, empiler, prélever, charger, décharger, transporter ou trier des objets quelconques au moyen d'un chariot, muni de moyens d'agrippage, monté sur un pont de chariotage, de manière à circuler à trajet répété et suivant une trajectoire dont la course est limitée par au moins un curseur pourvu. de moyens d'encliquetage et de renversement de marche du chariot, caractérisé en ce qu'on commande et positionne lesdits curseurs (38), constitués chacun d'un écrou, à l'aide d'une tige filetée (39) entraînée en rotation par un moteur électrique (48).

2. Procédé suivant la revendication 1, caractérisé en ce qu'on commande le chariot de guidage (31) pneumatiquement, à l'aide d'un vérin magnétique à double effet.

3. Procédé suivant l'une quelconque des revendications précédentes, caractérisé en ce qu'on positionne chaque curseur (38) à l'aide d'un dispositif électronique, comprenant un émetteur d'impulsions (45') et un compteur d'impulsions (45) qui détermine le nombre de fractions de révolutions de la tige filetée(39)entraînée en rotation et détermine ainsi le déplacement du curseur (38) par rapport à la tige filetée (39).

4. Procédé suivant l'une quelconque des revendications précédentes, caractérisé en ce que chaque curseur (38) comporte un interrupteur à contact et une butée de fin de course.

5. Procédé suivant l'une quelconque des revendications précédentes, caractérisé en ce qu'on prévoit un vérin pneumatique (41') de compensation pour reprendre une fraction du poids des moyens d'agrippage (32) et éventuellement de la charge (44), en vue d'enlever et de déposer celle-ci avec douceur.

6. Procédé suivant l'une quelconque des revendications précédentes, caractérisé en ce que le vérin (33) pneumatique susdit comporte un piston (34) qui transmet l'effort de déplacement à une pièce constituée d'un aimant permanent (35) entourant du côté extérieur la gaine du vérin, par couplage magnétique.

7. Procédé suivant l'une quelconque des revendications précédentes, caractérisé en ce qu'on règle la distance entre deux positions successives de chaque curseur (38) d'un intervalle légèrement supérieur à celle des objets (44) à empiler, de manière à espacer deux objets d'une même couche.

8. Procédé suivant l'une quelconque des revendications précédentes, caractérisé en ce qu'on décale les pièces de deux couches successives, de manière à empiler celles-ci de manière embriquée afin d'augmenter la stabilité de la pile.

9. Machine mettant en oeuvre un procédé suivant l'une quelconque des revendications précédentes et qui comporte un pont de chariotage (26) sur lequel circule à trajet répété, un chariot (31) muni de moyens d'agrippage (32) monté éventuellement sur un dispositif (40") de compensation du poids propre et de la charge.

10. Machine suivant la revendication 9, caractérisé en ce que le pont de chariotage (26) est réglé en hauteur par coulissement le long d'un guidage à colonne (5) à l'aide d'un système vis-écrou (27).

11. Machine suivant l'une quelconque des revendications 9 et 10, caractérisé en ce que les moyens d'agrip-d'agrippage (32) du chariot sont constitués d'une élingue, estrope, bande, électro-aimant, crochet, griffe, pince ou main mécanique.

0091421

1/7

FIG. 1

FIG. 2

FIG. 3

FIG. 4

FIG. 5

FIG 6

FIG. 7

# Office européen des brevets

## RAPPORT DE RECHERCHE EUROPEENNE

EP 83 87 0038

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| D,Y | DE-C-2 320 590 (FISCHER) <br> * Page 5, lignes 23-24; page 6, lignes 1-22; page 12, lignes 1-6; figure 1 * | 1,4,9 | B 65 G 61/00 |
| Y | US-A-3 870 164 (HAASE) <br> * Colonne 2, lignes 32-34; figure 4 * | 1 | |
| Y | US-A-3 884 363 (BENDIX) <br><br> * Colonne 4, lignes 42-50; colonne 10, lignes 52-68; colonne 11, lignes 1-9; colonne 14, lignes 39-53; figures 1,11 * | 1,3,7, 8,10, 11 | |

DOMAINES TECHNIQUES RECHERCHES (Int. Cl. 3)

B 65 G
B 25 J

Le présent rapport de recherche a été établi pour toutes les revendications

| Lieu de la recherche <br> LA HAYE | Date d'achèvement de la recherche <br> 16-06-1983 | Examinateur <br> OSTYN T.J.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OER Form 1503 03.82